# EUROPEAN PATENT SPECIFICATION

(11) **EP 3 359 446 B1**
(45) Date of publication and mention of the grant of the patent: **01.04.2020**
(21) Application number: 16785302.7
(22) Date of filing: 07.10.2016
(51) Int. Cl.: B64D 13/00, B64D 13/06

(54) **AIRCRAFT CABIN AIR TEMPERATURE SENSING APPARATUS AND SYSTEM USING PASSIVE AIR FLOW**
VORRICHTUNG UND SYSTEM ZUR MESSUNG DER FLUGZEUGKABINENLUFTTEMPERATUR MIT PASSIVEN LUFTSTROM
APPAREIL ET SYSTÈME DE DÉTECTION DE TEMPÉRATURE D'AIR DE CABINE D'AÉRONEF UTILISANT UN FLUX D'AIR PASSIF

(30) Priority: 08.10.2015 US 201562239002 P
(43) Date of publication of application: 15.08.2018
(73) Proprietor: Bombardier Inc., Dorval, Québec H4S 1Y9 (CA); Learjet Inc., Wichita, Kansas 67277-7707 (US)
(72) Inventor: FAGUNDES, Sandro Afonso Silva, Pointe-Claire, Québec H9R 1P5 (CA); STEFANINI, Luciano Martinez, Ville Saint-Laurent, Québec H4L 0B4 (CA); WANG, Hongzhi, Saint-Laurent, Québec H4R 0H7 (CA)
(74) Representative: Holmes, Matthew William
(86) International application number: PCT/US2016/056027
(87) International publication number: WO 2017/062789

(56) References cited:
- EP-A1- 2 907 755
- US-A- 3 368 406
- US-A- 6 024 639

## Description

### Cross-Reference to Related Application(s)

This Patent Application relies for priority on United States Provisional Patent Application Serial No. 62/239,002, filed on October 8, 2015.

### Field of the Invention

The present invention concerns an apparatus and system for sensing air temperature within the cabin of an aircraft. More specifically, the present invention concerns a construction for an air duct assembly within an aircraft to facilitate accurate cabin air temperature measurement using a passive air flow through the ducting. A system also is provided.

### Description of the Background and Related Art

As should be apparent to those skilled in the construction of aircraft, it is desirable to maintain the temperature of the air within the cabin of an aircraft within certain ranges for the comfort of passengers and crew. EP2907755 discloses an air temperature sensing apparatus for an aircraft. US6024639 discloses an injector air outlet with a sensor for temperature and smoke monitoring.

The temperature of the air within the cabin of an aircraft typically is measured by one or more temperature sensors that are placed within a moving airstream within a duct of the heating, ventilation, and air conditioning ("HVAC") system on board the aircraft.

To maintain an air flow that is sufficient to provide a reliable temperature measurement, it has been customary to install a temperature sensing enclosure into a dedicated air duct that interfaces with the cabin environment. The temperature sensing enclosure encompasses the temperature sensors and a fan to generate the air flow through the temperature sensing enclosure.

As should be apparent to those skilled in the art, the enclosure, fan, wiring, and any control systems associated with the temperature sensing enclosure all add weight to the aircraft. As also should be apparent to those skilled in the art, aircraft designers are motivated to reduce the overall weight of an aircraft.

In addition, the enclosure, fan, wiring, and control systems associated with the temperature sensing enclosure increase the complexity of the systems on board the aircraft. Increased complexity may, in some instances, translate into a greater probability of failure, thereby having a negative impact on cabin temperature control performance and overall reliability of the aircraft.

Additional system components also result in increased complexity for maintenance schedules and increased time invested in evaluating failure analysis scenarios.

As should be apparent, by simplifying the air duct assembly in an aircraft, considerable savings may be realized by the aircraft designer and manufacturer.

Separately, the components on board an aircraft typically are subject to strict certification standards set forth by various aviation regulatory agencies worldwide. Accordingly, aircraft designers are motivated to eliminate components to reduce the regulatory burdens associated therewith.

In short, there are many reasons why eliminating one or more components on an aircraft is considered to be beneficial. However, with the temperature sensing enclosure known in the prior art, no solutions have been forthcoming.

Simply, the prior art does not provide a suitable solution to one or more of the difficulties enumerated above.

### Summary of the Invention

The present invention addresses one or more of the deficiencies with respect to the prior art.

The present invention provides for an air temperature sensing apparatus for an aircraft that includes an ejector with a first air duct for receiving a first air flow from an aircraft air distribution duct, the first air duct defining a first cross-sectional area, a second air duct for receiving a second air flow from a passenger compartment of the aircraft, the second air flow merging with the first air flow downstream of the second air duct, and a restrictor connected to the first air duct defining a minimal cross-sectional area. The apparatus also includes a temperature sensor in fluid communication with the second air flow. The minimal cross-sectional area of the restrictor is smaller than the first cross-sectional area of the first air duct so as to create a region of low pressure within the ejector, causing the second air flow to be suctioned over the temperature sensor and through the second air duct.

In one contemplated embodiment, the restrictor defines a restrictor length, the restrictor decreasing in cross-sectional area over at least a portion of the restrictor length to the minimal cross-sectional area.

In another embodiment, the minimal cross-sectional area is upstream of a location where the second air duct connects to the restrictor.

Still further, the minimal cross-sectional area may be at a location where the second air duct connects to the restrictor.

It is contemplated that the ejector may include a housing disposed around an end of the first air duct and the restrictor, where the second air duct connects to the housing, and where the minimal cross-sectional area is downstream of a location where the second air duct connects to the housing.

The restrictor may increase in cross-sectional area over at least a portion of the restrictor length downstream of the minimal cross-sectional area.

In an alternative embodiment, the minimal cross-sectional area may remain constant over at least a portion of the restrictor length.

In one or more embodiments, the temperature sensor may be located within the second air duct.

The present invention also may include a controller connected to the temperature sensor.

In some embodiments, the ejector may have a third air duct, connected to the restrictor.

Where a third air duct is provided, the third air duct may be connected to the housing.

In another embodiment, the apparatus may include a flow balancing device disposed in the second air duct altering the second air flow in proportion to the first air flow.

The apparatus also may have a piccolo extending from the first air duct to the flow balancing device, altering the second air flow in response to a pressure of the first air flow.

The present disclosure also is directed to a system for sensing air temperature within an aircraft that includes an air distributor, an ejector with a first air duct for receiving a first air flow from an aircraft air distribution duct, the first air duct defining a first cross-sectional area, a second air duct for receiving a second air flow from a passenger compartment of the aircraft, the second air flow merging with the first air flow downstream of the second air duct, and a restrictor connected to the first air duct defining a minimal cross-sectional area. The system also may include a temperature sensor in fluid communication with the second air flow and a controller connected to the temperature sensor to receive temperature information from the temperature sensor. The minimal cross-sectional area of the restrictor is smaller than the first cross-sectional area of the first air duct so as to create a region of low pressure within the ejector, causing the second air flow to be suctioned over the temperature sensor and through the second air duct.

The system may be designed such that the restrictor defines a restrictor length, the restrictor decreasing in cross-sectional area over at least a portion of the restrictor length to the minimal cross-sectional area.

The system also may be constructed so that the restrictor increases in cross-sectional area over at least a portion of the restrictor length downstream of the minimal cross-sectional area.

Still further, the system may be arranged where the minimal cross-sectional area remains constant over at least a portion of the restrictor length.

In one embodiment of the system, the minimal cross-sectional area may be upstream of a location where the second air duct connects to the restrictor.

In another embodiment of the system, the minimal cross-sectional area may be at a location where the second air duct connects to the restrictor.

In the system, the ejector may include a housing disposed around an end of the first air duct and the restrictor, where the second air duct connects to the housing. In this embodiment, the minimal cross-sectional area may be downstream of a location where the second air duct connects to the housing.

In the system of the present invention, the temperature sensor may be located within the second air duct.

For the system, it is contemplated that the ejector may have a third air duct, connected to the restrictor. The third air duct may be connected to the housing.

The system also may include a flow balancing device disposed in the second air duct altering the second air flow in proportion to the first air flow.

In addition, the system may have a piccolo extending from the first air duct to the flow balancing device, altering the second air flow in response to a pressure of the first air flow.

Further aspects of the present invention will be made apparent from the paragraphs that follow.

### Brief Description of the Drawing(s)

The present invention is defined by the appended claims. It will now be described in connection with the drawings appended hereto, in which:
Fig. 1 is a graphical view of a portion of an air duct in an aircraft, illustrating a conventional temperature sensing enclosure;
Fig. 2 is a graphical view of a portion of an aircraft, illustrating one potential location for the air temperature sensing apparatus of the present invention in an air duct assembly installation;
Fig. 3 is a graphical view of an enlarged detail of a first embodiment of an air duct assembly in an aircraft, illustrating aspects including a first embodiment of a temperature sensing apparatus of the present invention;
Fig. 4 is a graphical view of an enlarged detail of a second embodiment of an air duct assembly in an aircraft, illustrating aspects including a second embodiment of a temperature sensing apparatus of the present invention;
Fig. 5 is an enlarged detail of a portion of the air duct assembly illustrated in Fig. 4;
Fig. 6 is a graphical illustration of a first operational state of a flow balancing device contemplated for use with the second embodiment of the air duct assembly illustrated in Fig. 4;
Fig. 7 is a graphical illustration of a second operational state of a flow balancing device contemplated for use with the second embodiment of the air duct assembly illustrated in Fig. 4;
Fig. 8 is a graphical illustration of a third operational state of a flow balancing device contemplated for use with the second embodiment of the air duct assembly illustrated in Fig. 4;
Fig. 9 is a graphical illustration of an illustrative example of a temperature sensing apparatus not falling under the scope of the present invention.
Fig. 10 is a graphical illustration of a third embodiment of a temperature sensing apparatus according to the present invention;
Fig. 11 is a graphical illustration of a fourth embodiment of a temperature sensing apparatus according to the present invention;
Fig. 12 is a graphical illustration of a fifth embodiment of a temperature sensing apparatus according to the present invention;
Fig. 13 is a graphical illustration of a sixth embodiment of a temperature sensing apparatus according to the present invention;
Fig. 14 is a graphical illustration of an illustrative example of a temperature sensing apparatus;
Fig. 15 is a graphical illustration of a further illustrative example of a temperature sensing apparatus;
Fig. 16 is a graphical illustration of a further illustrative example of a temperature sensing apparatus and
Fig. 17 is a graphical illustration of a further illustrative example of a temperature sensing apparatus.

### Detailed Description of Embodiment(s) of the Invention

The present invention is defined by the appended claims. It will now be described in connection with one or more embodiments thereof. The discussion of the embodiments is not intended to be limiting of the present invention. To the contrary, any discussion of embodiments is intended to exemplify the breadth and scope of the present invention. As should be apparent to those skilled in the art, variations of the embodiment(s) described herein may be employed without departing from the scope of the present invention. Those variations are intended to be encompassed by the scope of the present patent application.

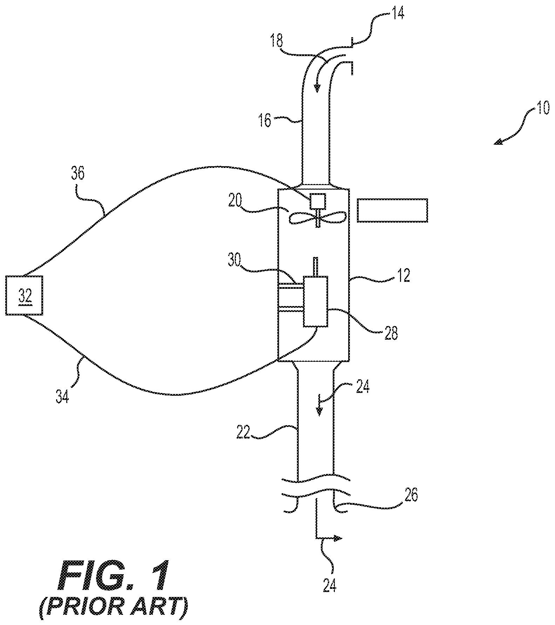

Fig. 1 is a graphical view of a portion of an air duct assembly installation 10 in an aircraft, illustrating a conventional temperature sensing enclosure 12 according to the prior art. The air duct assembly installation 10 includes an inlet 14 that draws air from the cabin or cockpit of the aircraft into an inlet section 16 of the air duct assembly installation 10. The flow of the air into the inlet section 16 is referred to as the inlet air 18 in the discussion that follows.

The inlet air 18 is drawn into the temperature sensing enclosure 12 by operation of a fan 20 that is positioned within the temperature sensing enclosure 12. The inlet air 18 is then discharged into an outlet section 22 connected to the temperature sensing enclosure 12. The flow of the air in the outlet section 22 is referred to as "outlet air" 24. The outlet air 24 is discharged from the outlet section 22 of the air duct assembly installation 10 through the outlet 26 back into the cabin or cockpit of the aircraft. Alternatively, the outlet 26 may be installed to discharge the outlet air 24 in another area of the aircraft as opposed to the cabin or cockpit *(e.g.,* a zone between the interior liner and the fuselage of the aircraft). It is contemplated that the outlet air 24 may be discharged in any area or zone within the aircraft as required or as desired by the aircraft manufacturer.

With continued reference to Fig. 1, a temperature sensor 28 is positioned within the temperature sensing enclosure 12. The temperature sensor 28 typically is positioned within the temperature sensing enclosure 12 via a suitable mount 30 that locates the temperature sensor 28 within the air stream. As illustrated, the temperature sensor 28 connects to a control system 32 via one or more wires 34. The fan 20 also is contemplated to connect to the control system 32 via one or more wires 36. The control system 32 receives the signals from the temperature sensor 28 so as to be able to provide control inputs to an air conditioning unit.

The control system 32 may be an Environment Control System controller (also known as an "ECS controller") that is able to regulate the air temperature within the cabin through control of an air conditioning unit or heater, as needed. Separately, the control system 32 may be a separate system that feeds data to the ECS controller for the aircraft.

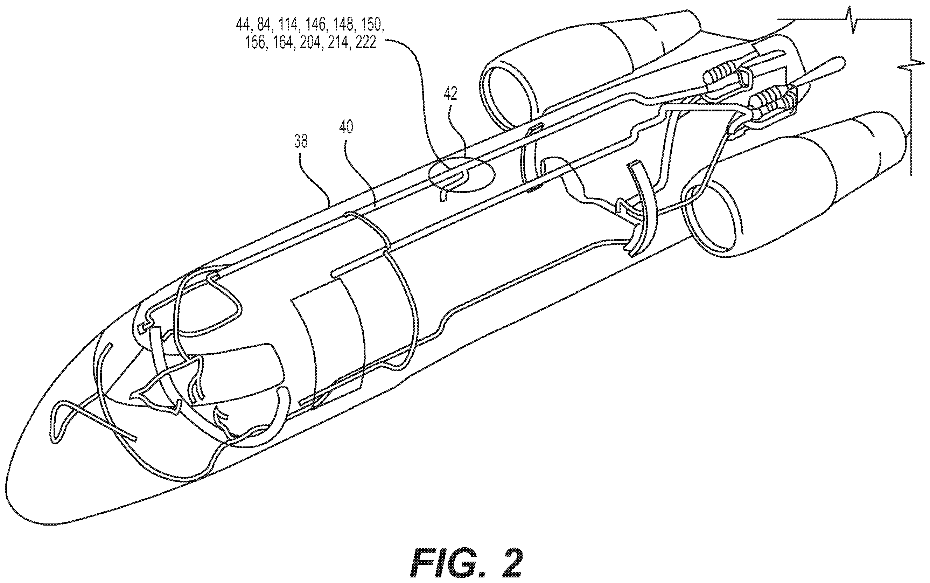

Fig. 2 illustrates a portion of an aircraft 38 that includes a plurality of air ducts that make up an air distribution system 40 on the aircraft 38. In one location 42, a temperature sensing apparatus 44, 84, 114, 146, 148, 150, 156, 164, 204, 214, 222 according to one or more embodiments of the present invention is positioned. The location 42 of the temperature sensing apparatus 44, 84, 114, 146, 148, 150, 156, 164, 204, 214, 222 is not contemplated to be limiting of the present invention. It is contemplated that the temperature sensing apparatus 44, 84, 114, 146, 148, 150, 156, 164, 204, 214, 222 may be positioned at any location 42 within the aircraft 38 without departing from the scope of the present invention.

With respect to Fig. 2, while the present invention is described in connection with a single temperature sensing apparatus 44, 84, 114, 146, 148, 150, 156, 164, 204, 214, 222 on the aircraft 38, the present invention is not limited thereto. To the contrary, the air distribution system 40 may include several temperature sensing apparatuses 44, 84, 114, 146, 148, 150, 156, 164, 204, 214, 222. Multiple temperature sensing apparatuses 44, 84, 114, 146, 148, 150, 156, 164, 204, 214, 222 distributed throughout the aircraft 38 are contemplated to provide temperature sensing for different zones or regions within the aircraft 38. With such a configuration, it is contemplated that individual ones of the temperature sensing apparatuses 44, 84, 114, 146, 148, 150, 156, 164, 204, 214, 222 may be employed to provide control over the temperature within selected zones and/or regions within the aircraft 38. Where the aircraft 38 is configured with separate cabin regions, it is contemplated that control over the temperature in the individual regions also may be provided.

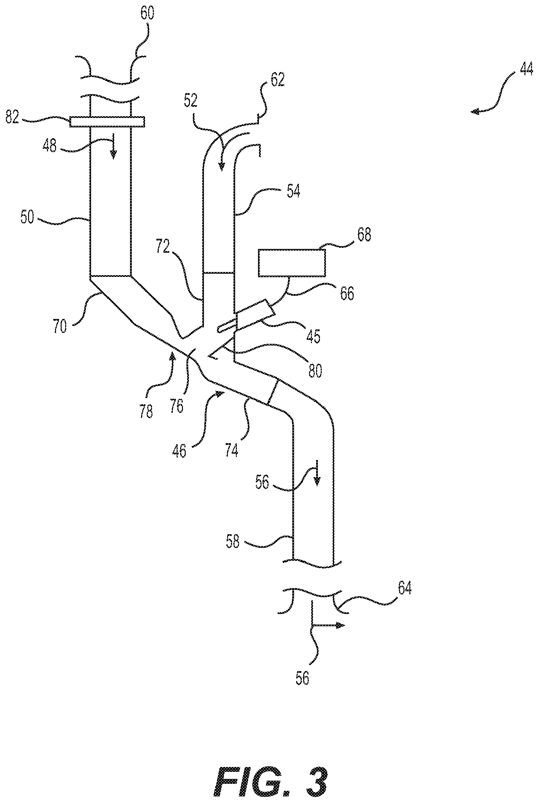

Fig. 3 is a graphical view of an enlarged detail of a first embodiment of the temperature sensing apparatus 44 according to the present invention. As shown, the temperature sensing apparatus 44 comprises an ejector 46 and a temperature sensor 45 together with other elements.

Without limiting the scope of the present invention, the temperature sensing apparatus 44 is broadly characterized as a device that permits accurate air temperature readings by causing a flow of air from the cabin and/or the cockpit of the aircraft 38 to flow past the temperature sensor 45. The present invention relies on passive generation of air flow across the temperature sensor 45, as discussed in greater detail herein.

The temperature sensing apparatus 44 of the present invention operates according to Bernoulli's Law, which states generally that the speed of a fluid increases simultaneously with a decrease in the pressure of the fluid or a decrease in the fluid's potential energy. This principle is named after Daniel Bernoulli, who published the details of this principle in his book, entitled *Hydrodynamica,* in 1738.

As illustrated in Fig. 3, the ejector 46 merges a first air flow 48 in a first air duct 50 with a second air flow 52 in a second air duct 54. The combined air flow, a third air flow 56, exits from the ejector 46 via a third air duct 58.

For reference, a first inlet 60 is provided into the first air duct 50. A second inlet 62 is provided into the second air duct 54. An air outlet 64 is provided at the outlet of the third air duct 58. As should be apparent, the inlets 60, 62 and the outlet 64 are merely illustrative of the embodiment depicted in Fig. 3. The present invention is not contemplated to be limited to any particular arrangement of inlets 60, 62 and/or outlets 64. For example, variants of the illustrated embodiments may include multiple inlets 60 (and/or multiple inlets 62) and multiple outlets 64 incorporated into the air distribution system 40.

Figs. 3-5 illustrate contemplated embodiments of the present invention where the outlet air 56 is discharged into the air duct assembly installation 44 before being returned to the cabin of the aircraft. The present invention contemplates that the outlet air 56 may be conducted further in the air duct assembly installation before being returned to the cockpit or cabin of the aircraft

In operation, it is contemplated that the first air flow 48 passing through the first air duct 50 is air that is being supplied as part of the air supply of the air distribution system 40 in the interior of aircraft 38. The second air flow 52 entering the second inlet 62 is drawn directly from the cabin and/or cockpit of the aircraft 38. The second air flow 52 passes over the temperature sensor 45, which measures the temperature of the second air flow 52. As a result, the temperature sensor 45 measures the temperature of the air in the cabin and/or cockpit of the aircraft 38. The temperature sensor 45 is connected, via wiring 66, to an environmental control system 68.

It is contemplated that the environmental control system 68 will be associated with the cooling, heating, and ventilation controls provided on board the aircraft 38. However, the signal provided to the environmental control system 68 may be associated with a zone or region within the aircraft 38 and other temperature sensor signals associated with other zones may provide signals to the same master environmental control system on board the aircraft 38. For purposes of the present invention, therefore, the environmental control system 68 may be a stand-alone system or may be a system designed to interface with one or more other environmental controllers on board the aircraft 38. In other words, the environmental control system 68 should not be understood to refer only to a single component on the aircraft 38.

With continued reference to Fig. 3, the ejector 46 is Y-shaped. The ejector 46 includes a first air duct 70, a second air duct 72, and a third air duct 74. In this embodiment, the temperature sensor 45 is positioned in the second air duct 72, which is the air duct that receives the second air flow 52 from the cabin/cockpit. It is contemplated, in an alternative, that the temperature sensor 45 may be positioned at any location in the second air duct 54 without departing from the scope of the present invention. However, the illustrated embodiment positions the temperature sensor 45 in a suitable location to accurately detect the temperature of the second air flow 52.

With respect to the temperature sensor 45, the present invention contemplates reliance on a thermocouple. However, any suitable temperature sensor may be employed without departing from the scope of the present invention.

With continued reference to Fig. 3, the second air duct 72 of the ejector 46 connects to the first air duct 70 at region 76. As shown, region 76 includes a restrictor 78 in the first air duct 70 that presents a minimal cross-sectional area that is smaller than a cross-sectional area of the first air duct 70. For the ejector 46, the restrictor 78 is positioned upstream of the third air duct 74 and is defined, at least in part, by a restrictor length. The minimal cross-sectional area at the restrictor 78, defined along the restrictor length, causes the first air flow 48 within the first air duct 70 to increase its velocity in accordance with the principle of continuity. This increased velocity results in a reduced pressure within the region 76. This effect also is referred to as the Venturi effect, as should be apparent to those skilled in the art.

In operation, as the first air flow 48 within first air duct 70 increases its velocity through the restrictor 78 due to the minimal cross-sectional area, a region of low pressure is created in and after the restrictor 78 and, therefore, also within the region 76 downstream of the restrictor 78. The low pressure generates a suction force that draws the second air flow 52 through the second air duct 54, into the second air duct 72 of the ejector 46. As illustrated, the second air flow 52 travels through the second air duct 72 and over the temperature sensor 45.

The geometry and shape of the ejector 46 and the restrictor 78 contribute to the efficiency of the second air flow 52 over the temperature sensor 45. The geometry and shape of the ejector 46 and the restrictor 78 also influence the sizing of the ejector 46. As should be apparent, the geometry and shape of the ejector 46 and the restrictor 78 are anticipated to be tailored for applications in different airplanes and for different air distribution architectures. Accordingly, specific dimensions are expected to vary from one installation to the next.

It is contemplated that the restrictor 78 may decrease the cross-sectional area of the first air duct 70 within a range of between about 10 - 70 %. In other embodiments, the restriction is contemplated to be between 20 - 60 %, 30 - 50 %, or about 40 %, as required or as desired. In selected embodiments, the restriction is contemplated to fall within a range of about 35 -45 %, with an average restriction being about 40 %. Still other embodiments are contemplated to fall within the scope of the present invention.

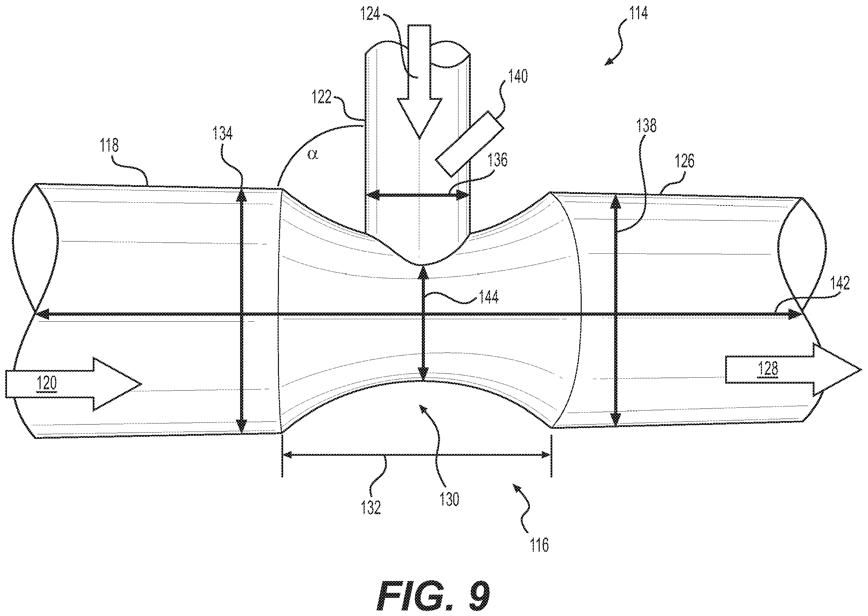

The ejector 46 is contemplated to include at least the first air duct 70, the second air duct 72, and the restrictor 78. The first air duct 70, the second air duct 72, and the restrictor 78 are operationally connected to one another. The third air duct 74 also may be considered to be a part of the ejector 46 depending on the configuration of the ejector 46. Still further, the ejector 46 may include an additional housing. As detailed with respect to the embodiments illustrated in Figs. 9-17, the ejector 46 may have any number of configurations that are considered to fall within the scope of the present invention.

The air temperature sensing apparatus 44 is contemplated to encompass at least the ejector 46 and the temperature sensor 45. The temperature sensor 45 is contemplated to be positioned in the second air duct 72.

As noted, the restrictor 78 defines a minimal cross-sectional area that is smaller than the first cross-sectional area of the first air duct 70. The minimal cross-sectional area creates a region of low pressure within the ejector 46, causing the second air flow 52 to be suctioned over the temperature sensor 45 and through the second air duct 72.

As discussed in connection with one or more of the embodiments described in connection with Figs. 9-17, the restrictor 78 defines a restrictor length 132, 154, 160, 200 that decreases in cross-sectional area over a portion of the restrictor length 132, 154, 160, 200 to the minimal cross-sectional area 144, 162, 194. The restrictor 78 also may increase in cross-sectional area over at least a portion of the restrictor length 132, 154, 160, 200 after the minimal cross-sectional area 144, 162, 194. Still further, the minimal cross-sectional area 144, 162, 194 may remain constant over a portion of the restrictor length 132, 154, 160, 200.

The minimal cross-sectional area 144, 162, 194 may be upstream of a location where the second air duct 72 connects to the restrictor 78. Alternatively, the minimal cross-sectional area may be at the location where the second air duct 72 connects to the restrictor 78. Still further, the ejector 46 may include a housing 168 that is disposed around an end of the first air duct 70 and the restrictor 78. In this embodiment, the minimal cross-sectional area 194 is contemplated to be downstream of a location where the second air duct 72 connects to the housing 168.

In Fig. 3, the ejector 46 is illustrated as including an interior wall 80. The interior wall 80 may be provided to help establish suction in the ejector 46. The wall 80 is contemplated to be shaped with different geometries that will facilitate a smooth junction as the two air flows merge and proceed to the ejector exit 74. The shape of the wall 80 also is contemplated to avoid (or at least minimize) reverse flow from the first air duct 50 and the third air duct 58 to the second air duct 54. Validations of optimized shape configurations are achievable with use of digitalized tools such as CFD ("Computational Fluid Dynamics"). The shape of the wall 80 indicated in Fig. 3, therefore, is purely illustrative of one contemplated embodiment and should not be understood to limit the scope of the present invention.

As also illustrated in Fig. 3, it is contemplated that one or more air distributors 82 may be positioned in (or be associated with) the first air duct 50 to generate the first air flow 48. The air distributors 82 may include supply ducts, fans, and/or any other type of pneumatic system as should be apparent to those skilled in the art.

As also should be apparent to those skilled in the art, the environmental air control system 68 on an aircraft 38 generates different flow rates for the first air flow 48 at different altitudes. The first air flow 48, therefore, is not a constant at all times. Instead, the first air flow 48 is a changing variable. For a number of reasons, as the altitude of the aircraft 38 changes, the control system 68 alters the first air flow 48. Cabin pressure differences and different air densities encompass some of the variables that the control system 68 takes into account to alter the first air flow 48.

While not considered limiting of the present invention, it is contemplated that the first air flow 48 will be at least five times (5x) the rate of the second air flow 52 (in scfm). This is considered to be a minimum magnitude for the first air flow 48 to allow an effective operation of the ejector 46. Under normal operating conditions, the first air flow 48 is contemplated to be controlled within a typical range of between about 40 - 180 scfm (0.0188 - 0.0850 m³/s). As should be apparent to those skilled in the art, the exact flow may vary for any number of reasons. For example, the sizes and shapes of the various ducts are expected to be factors contributing to the magnitude of the first air flow 48, the second air flow 52, and the third air flow 56.

In one contemplated embodiment, the environmental control system 68 may alter the first air flow 48 as a result of a temperature change in the cabin air. The temperature change may be the result of a change in environmental conditions. The temperature change also may result from a change in a thermostat setting to accommodate the comfort of the passengers and/or crew. As such, there are a number of factors that the control system 68 takes into account when adjusting the first air flow 48.

In addition, the number of air conditioning units operating will contribute to the magnitudes of the different air flows 48, 52, 56. Under normal operation, all of the air conditioning units should be available for operation in the aircraft 38. In an abnormal and/or a failure mode of operation, at least one air conditioning unit might be inoperative, causing reductions in the air flows 48, 52, 56 within the air distribution system 40. Here, the ejector 46 may be sized to meet at least the minimum air flow requirements when one air conditioning unit is inoperative. As should be apparent, reduced air flows might impact the operation of the ejector 46.

An aircraft 38 with a more sophisticated cabin air management systems (including the environmental control system 68) is contemplated to take into account other variables including, but not limited to, the number of passengers on board the aircraft 38. Passengers add heat to the environment within the cabin and, therefore, may be considered as a variable to define the optimized air flow required for the cabin.

It is contemplated that the shape, size, and position of the ejector 46 in the air distribution system 40 will be constructed to operate over a range of magnitudes for the first air flow 48. As such, the ejector 46 will generate different magnitudes for the second air flow 52 proportional to the magnitude of the first air flow 48.

The ejector 46 is contemplated to provide an internal shape, adjacent to the temperature sensor 45, to assure an accurate measurement of the temperature of the second air flow 52 and, therefore, of the temperature of the air in the cabin of the aircraft 38.

As discussed, the cross-sectional shapes of the first air duct 70, the second air duct 72, and the third air duct 74 are contemplated to play a role in the operation of the ejector 46. In the context of the present invention, the cross-sectional shapes are contemplated to be circular. However, the first air duct 70, the second air duct 72, and the third air duct 74 may be designed with any alternative cross-sectional shape without departing from the scope of the present invention.

In addition, the angles at which the three air ducts 70, 72, 74 intersect one another may play a role in the operation of the ejector 46. It is contemplated, for example, that the ejector 46 will have a generally Y-shape with the first and third air ducts 70, 74 being approximately parallel and collinear with one another. In this configuration, the second air duct 72 is contemplated to be disposed at an angle that may vary from about 30º to about 75º with respect to the first and third air ducts 70, 74. As should be apparent, this is merely an example and is not intended to be limiting of the present invention.

As may be apparent, the angle of the second air duct 72 with respect to the first and third air ducts 70, 74 is contemplated to be selected to promote the second air flow 52 through the second air duct 72 and, thereby, to contribute to the optimization of the installation of the temperature sensor 45, improving accuracy of the temperature readings generated thereby. While an angle of 45º is illustrated, any suitable angle may be employed. Angles of 40-50º, 35-55º, 30-60º, and 50-70º are contemplated to fall within (but not limit) the present invention. Ranges between about 30º to about 45º or about 50º to about 70º appear to be suitable for establishing acceptable operating conditions. Specific suitable angles include, but are not limited to 30º, 45º, and 60º.

As should be apparent from the foregoing, there are a number of advantages that are presented by the temperature sensing apparatus 44 of the present invention. First, by eliminating the temperature sensing enclosure 12 and fan 20, there is a reduction in the number of components installed on board the aircraft 38. This reduces the complexity and weight of the aircraft 38, along with providing other advantages. Second, by eliminating the fan 20, the electrical system on the aircraft 38 is simplified. Third, by simplifying the system on the aircraft 38, there are fewer components that may fail, and/or present dormant failure conditions. As a result, maintenance of the aircraft 38 may be simplified and the reliability of the aircraft 38 may be improved.

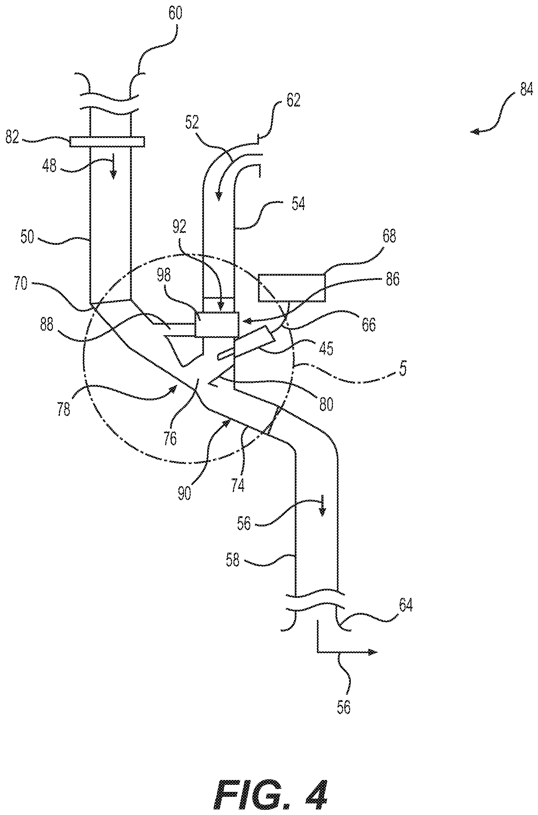

Fig. 4 is a graphical illustration of a second embodiment of a temperature sensing apparatus 84 according to the present invention. Many of the elements of the temperature sensing apparatus 84 are the same as in the first embodiment of the temperature sensing apparatus 44 described above. Accordingly, similar reference numbers are used to simplify the description of this second embodiment of the temperature sensing apparatus 84.

The second temperature sensing apparatus 84 differs from the first temperature sensing apparatus 44 in that the second temperature sensing apparatus 84 includes a flow balancer 86. The flow balancer 86 includes a piccolo 88 that extends from the first air duct 70 of the ejector 90 to the second air duct 72. The second air duct 72 of the ejector 90 include a flow balancing device 92 installed upstream of the temperature sensor 45.

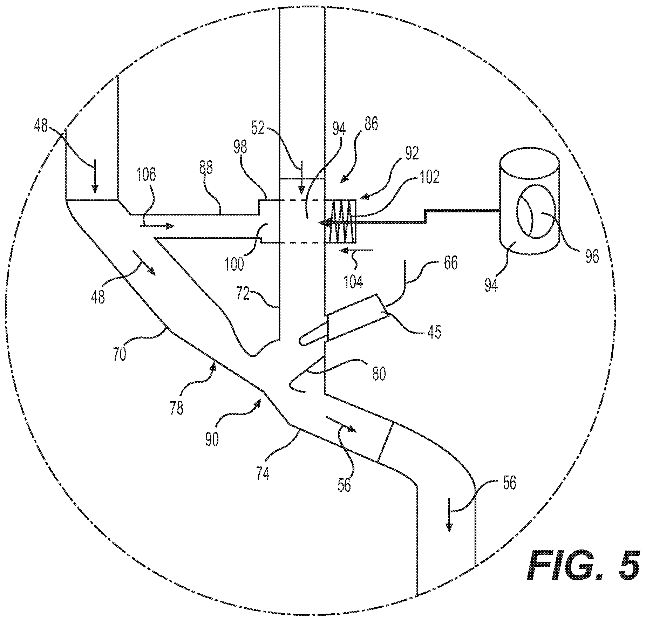

As shown in Fig. 5, the flow balancing device 92 includes a cylinder 94 with an orifice 96 therethrough. The cylinder 94 slides within a housing 98, which defines a small chamber 100 therein. The cylinder 94 is biased by a preloaded spring 102 that presses the cylinder 94 in the direction of the arrow 104.

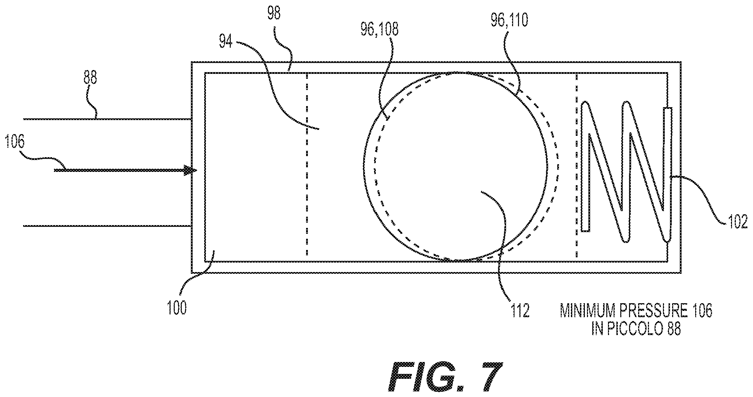

In the illustrated embodiment, the inner diameter of the orifice 96 is the same as the inner diameter of the second air duct 72. Accordingly, when the cylinder 94 is in the fully opened position such that the cylinder 94 compresses the spring 102 at least partially (Fig. 7), the orifice 96 is contemplated to be in register with the second air duct 72. As such, when in the fully opened position, no portion of the cylinder 94 (or only a minimal portion) presents an aspect to inhibit flow through the second air duct 72. When the cylinder 94 is in the closed position such that the spring 102 presses the cylinder 94 in the direction of the arrow 104, the orifice 96 is no longer in register with the second air duct 72. As a result, at least a portion of the cylinder 94 occludes the passageway through the second air duct 72, thereby inhibiting flow therethrough.

Motive power for the operation of the cylinder 94 is provided by air in the piccolo 88. In particular, air pressure 106 in the piccolo 88 is contemplated to be equivalent to (or nearly equivalent to) the pressure of the first air flow 48 in the first air duct 50. The pressure of the first air flow 48 also is contemplated to be the same in the first air duct 70, immediately upstream of the restrictor 78. The piccolo 88 connects the first air duct 70 to the cylinder 94, thereby applying that pressure to the end of the cylinder 94. The cylinder 94 acts like a piston and moves linearly in the housing 98, as biased by the spring 102, in proportion to the pressure 106 of the first air flow 48.

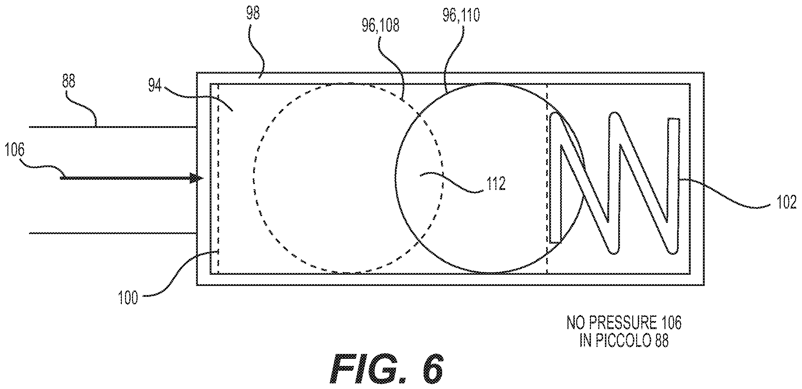

Figs. 6-8 describe the operation of the cylinder 94 according to one embodiment of the present invention.

Fig. 6 illustrates one contemplated position of the cylinder 94 in the housing 98 when the pressure 106 in the piccolo 88 is zero or near to zero. Fig. 6 illustrates the closed position of the flow balancing device 92.

When in the closed condition, the cylinder 94 is biased by the spring 102 such that the inner diameter 108 of the opening 96 is not in register with the inner diameter 110 of the second air duct 72. Here, the inner diameter 108 of the opening 96 is nearly non-overlapping with the inner diameter 110 of the second air duct 72. In this closed position, it is contemplated that there will remain a small opening 112 to avoid the creation of any back pressure in the second air duct 72 and, thereby, avoid locking the cylinder 94 in the housing 98 as a result of the back pressure.

Fig. 7 illustrates the open position of the cylinder 94. In this illustration, the inner diameter 108 of the opening 96 is in register with the inner diameter 110 of the second air duct 72. In this open state, the inner diameter 108 of the opening 96 nearly overlaps the inner diameter 110 of the second air duct 72. As such, a maximum magnitude of the second air flow 52 is permitted to pass through the second air duct 72. A minimum pressure 106 in the piccolo 88 is contemplated to move the cylinder 94 into the open position illustrated.

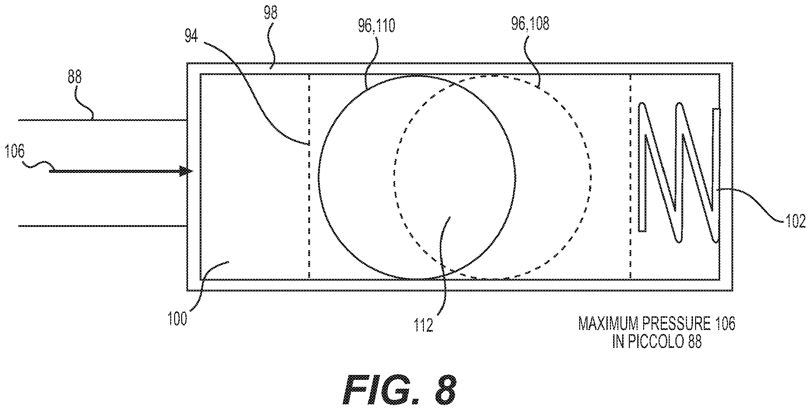

Fig. 8 illustrates a partially occluded position of the cylinder 94. In this state, the pressure 106 in the piccolo is at a maximum magnitude. As a result, the cylinder 94 has compressed the spring 102 to a maximal extent. The inner diameter 108 of the opening 96 is no longer in register with the inner diameter 110 of the second air duct 72. As a result, the opening 112 is smaller than the open position illustrated in Fig. 7. As should be apparent, therefore, in the partially occluded position, the cylinder 94 restricts the second air flow 52.

The operation of the cylinder 94 as illustrated in Figs. 6-8 is intended to illustrate an automatic operation of the temperature sensing apparatus 84 with the addition of the flow balancer 86. The flow balancer 86 is intended to function automatically and proportionately with respect to the pressure 106 of the air in the piccolo 88. As such, the cylinder 94 is contemplated to operate as a proportional function of the first air flow 48.

The opening and partial occlusion of the opening 112 in Figs. 7-8 is contemplated to avoid air velocities that could generate noise at the second air duct 72. The opening and partial occlusion of the opening 112 in Figs. 7-8 also is contemplated to assist with accurate temperature measurement by restricting the second air flow 52 to a magnitude suitable for accurate operation of the temperature sensor 45. With reference to Fig. 8, for example, if the second air flow 52 is to too high or too low, it is possible that the temperature reading may drift from an accurate reading. It is for this reason, among others, that the opening 112 is restricted when the second air flow 52 reaches a maximum value.

As should be apparent from the discussion above, the opening 112 is contemplated to decrease in overall area as the second air flow progresses from the minimum value (Fig. 7) to the maximum value (Fig. 8). This progression may be linear or non-linear, depending upon the characteristics of the spring 102 and other design variables, such as temperature sensor sensitivity, etc.

Fig. 9 is a graphical illustration of an illustrative example of a temperature sensing apparatus 114 not falling under the scope of the present invention.

Consistent with the temperature sensing apparatuses 44, 84, the temperature sensing apparatus 114 includes an ejector 116. The ejector 116 comprises a first air duct 118 for receiving a first air flow 120 from an aircraft air distribution duct, a second air duct 122 for receiving a second air flow 124 from a passenger compartment of the aircraft, and a third air duct 126 comprising third air flow 128. The ejector 116 includes a restrictor 130 that is defined, in part, by a restrictor length 132 extending between the first air duct 118 and the third air duct 126.

With respect to this example and the remaining contemplated embodiments, it is noted that the third air duct 126 is not contemplated to be needed for all configurations of the present invention. It is contemplated that, after the first air flow 120 and the second air flow 124 are combined, the combined air flow may be discharged directly into the environment rather than being conducted by the third air duct 126 to another location.

As shown in Fig. 9, the first air duct 118, the second air duct 122, and the third air duct 126 are cylindrically shaped. Accordingly, the first air duct 118 has a first cross-sectional area 134, the second air duct 122 has a second cross-sectional area 136, and the third air duct 126 has a third cross-sectional area138.

While the first air duct 118, the second air duct 122, and the third air duct 126 are illustrated as being cylindrical in cross-section for the embodiment of the temperature sensing apparatus 114, the present invention is not intended to be limited solely to such a construction. In alternate contemplated embodiments, one or more of the first air duct 118, the second air duct 122, and third air duct 126 may have cross-sectional shapes that are elliptical, oval, semi-circular, rectangular, square, triangular, polygonal, and/or amorphously shaped, among others. In these alternative embodiments, the first cross-sectional area 134, the second cross-sectional area 136, and the third cross-sectional area 138 will not be circular in shape, as should be apparent to those skilled in the art.

Consistent with the temperature sensing apparatuses 44, 84, the temperature sensor 140 is disposed within the second air duct 122.

As should be apparent from Fig. 9, the first air duct 118 and the third air duct 126 are disposed such that they are in line with one another, along a common axis 142. While this arrangement is not required, it is contemplated that this arrangement will offer a simple, effective construction for the temperature sensing apparatus 114.

In the example illustrated in Fig. 9, the restrictor 130 extends between the first air duct 118 and the third air duct 126, defines a restrictor length 132, and is disposed along the common axis 142.

The restrictor 130 defines a minimal cross-sectional area 144 at approximately a midpoint of the restrictor length 132. As a result, the restrictor 130 is constructed with a decreasing cross-sectional area over at least a portion of the restrictor length 132 to the minimal cross-sectional area 144. Still further, the restrictor 130 is constructed with an increasing cross-sectional area over at least a portion of the restrictor length 132 downstream of the minimal cross-sectional area 144. In a further contemplated embodiment, the minimal cross-sectional area 144 may remain constant over at least a portion of the restrictor length 132.

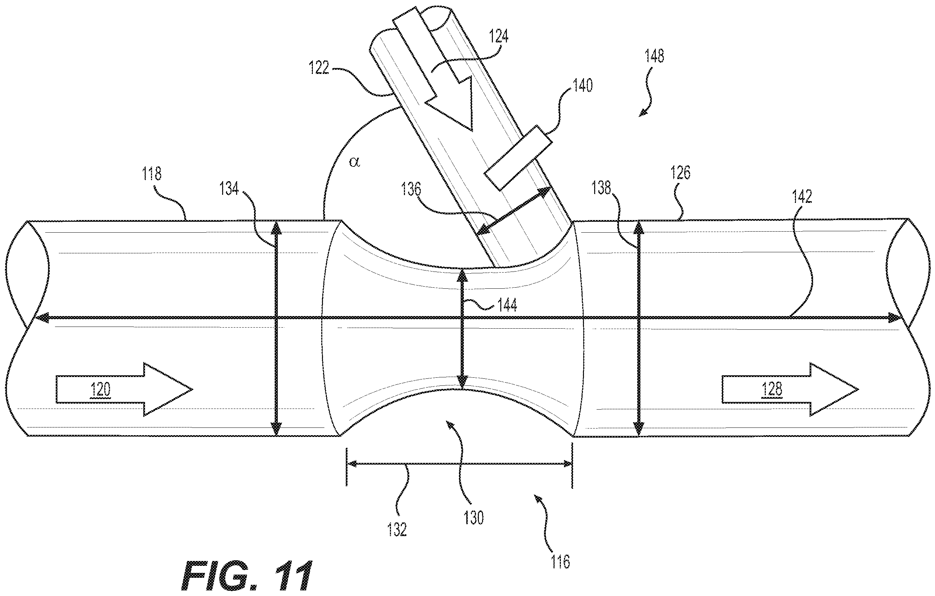

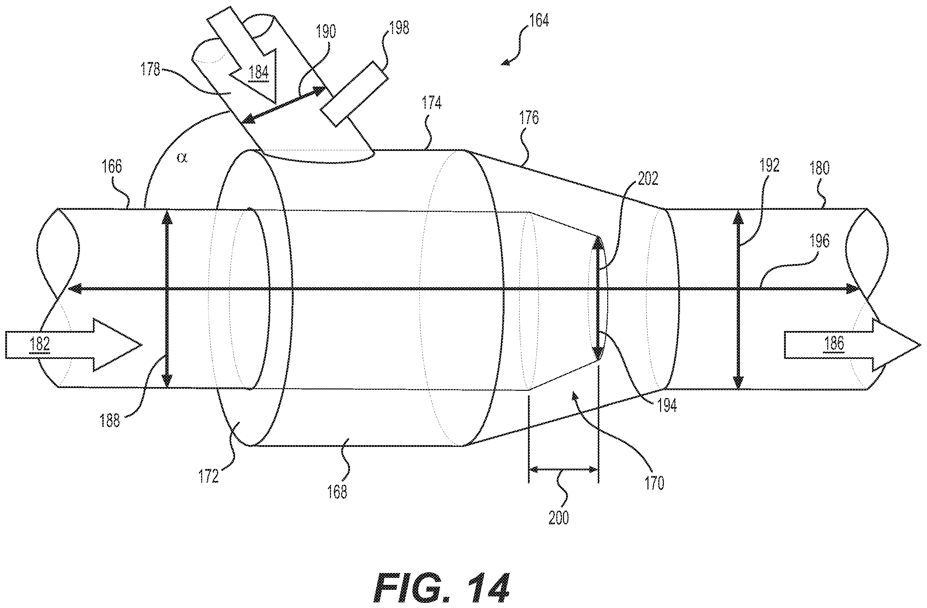

As discussed in connection with Figs. 9-10, the minimal cross-sectional area 144 may be at a location where the second air duct 122 connects to the restrictor 130. As detailed in Figs. 11-13, the minimal cross-sectional area 144 may be upstream of a location wherein the second air duct 122 connects to the restrictor 130, 152, 158. Still further, with respect to the illustrative examples not falling under the scope of the invention illustrated in Figs. 14-17, the minimal cross-sectional area 194 may be downstream of a location where the second air duct 178 connects to a housing 168 surrounding an end of the first air duct 166.

Concerning the example illustrated in Fig. 9, the second air duct 122 connects to the restrictor 130 such that the second air duct 122 is oriented perpendicularly to the common axis 142. In other words, the angle α between the second air duct 122 and the common axis 142 is 90º. Moreover, the second air duct 122 connects to the restrictor 130 at the midpoint of the restrictor 130, coincident with the location of the minimal cross-sectional area 144.

As discussed above, the restrictor 130 defines a minimal cross-sectional area 144 that is less than the first cross-sectional area 134 of the first duct 118 and, in some contemplated embodiments, also less than the third cross-sectional area 138 of the third duct 126. As a result of the Venturi effect, the speed of the air passing through the restrictor 130 is increased. This increase in the air speed creates a suction that draws the second air flow 124 into the second air duct 122.

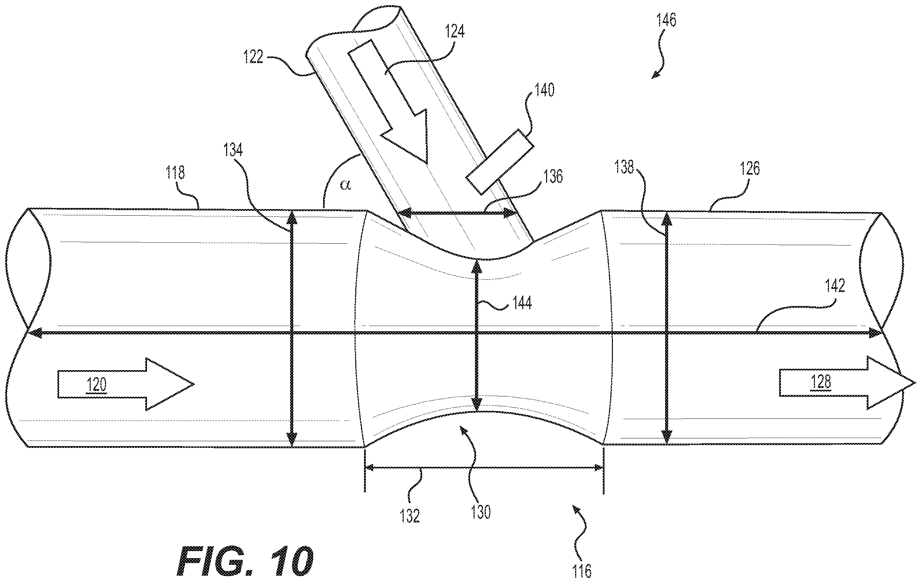

Fig. 10 is a graphical illustration of a third embodiment of a temperature sensing apparatus 146 according to the present invention. This embodiment is similar to the temperature sensing apparatus 114 and shares elements in common with the temperature sensing apparatus 114. Accordingly, similar reference numbers are employed. It is noted that the use of the same reference numbers is not intended to be limiting of this fourth embodiment of a temperature sensing apparatus 146 or, where the same reference numbers are employed for convenience, of any other embodiment described herein.

As should be apparent from Fig. 10, the second air duct 122 also connects to the restrictor 130 at the location of the minimal cross sectional area 144 of the restrictor 130. However, in this embodiment, the second air duct 122 is disposed at the angle α of approximately 60º with respect to the common axis 142. It is contemplated that the angular orientation of the second air duct 122 with respect to the common axis 142 will permit a more compact construction for the temperature sensing apparatus 146, which may be helpful in areas of the aircraft 38 where space is of a greater concern.

While the angle α is illustrated as being 60º for this embodiment and any other embodiment, it should be understood that the present invention is not limited solely to this construction. Other suitable angles include, but are not limited to 30º ± 10º, 45º ± 10º, 60º ± 10º. Still other suitable angles include 30º ± 5º, 45º ± 5º, 60º ± 5º.

Fig. 11 is a graphical illustration of a fourth embodiment of a temperature sensing apparatus 148 according to the present invention. This fourth embodiment differs from the third embodiment of the temperature sensing apparatus 146 in that the second air duct 122 connects to the restrictor 130 at a point downstream of the minimal cross-sectional area 144.

In embodiments where the minimal cross-sectional area 144 remains constant for a portion of the length 132 of the restrictor 130, it is contemplated that the second air duct 122 may connect at a position along the length of the minimal cross-sectional area 144, consistent with the illustrations in Figs. 9 and 10. Still further, in the instance where the minimal cross-sectional area 144 remains constant for a portion of the length of the restrictor 130, the second air duct 122 may connect to the restrictor 130 at a position downstream of the minimal cross-sectional area 144, consistent with the embodiments depicted in Figs. 11-13.

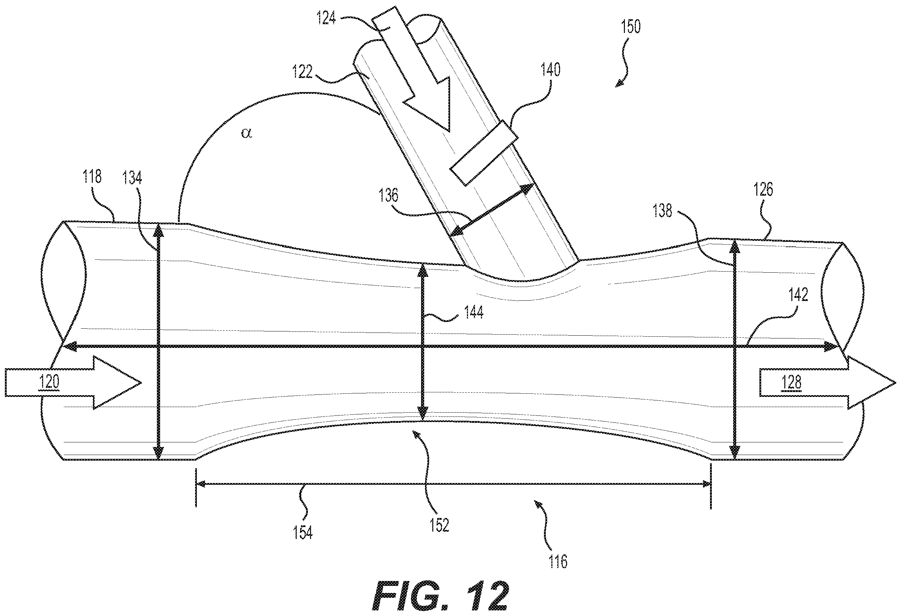

Fig. 12 is a graphical illustration of a fifth embodiment of a temperature sensing apparatus 150 according to the present invention. This embodiment is similar to the temperature sensing apparatus 148. In this embodiment, the restrictor 152 is elongated by comparison with the restrictor 130. Being elongated by comparison with the restrictor 130, the restrictor 152 defines a restrictor length 154 that is greater than the restrictor length 132.

It is noted that the restrictor length 132, 154 is not intended to be limiting of the scope of the present invention. The restrictor length 132, 154 may be varied to accommodate any number of configurations and environmental constraints, as should be apparent to those skilled in the art.

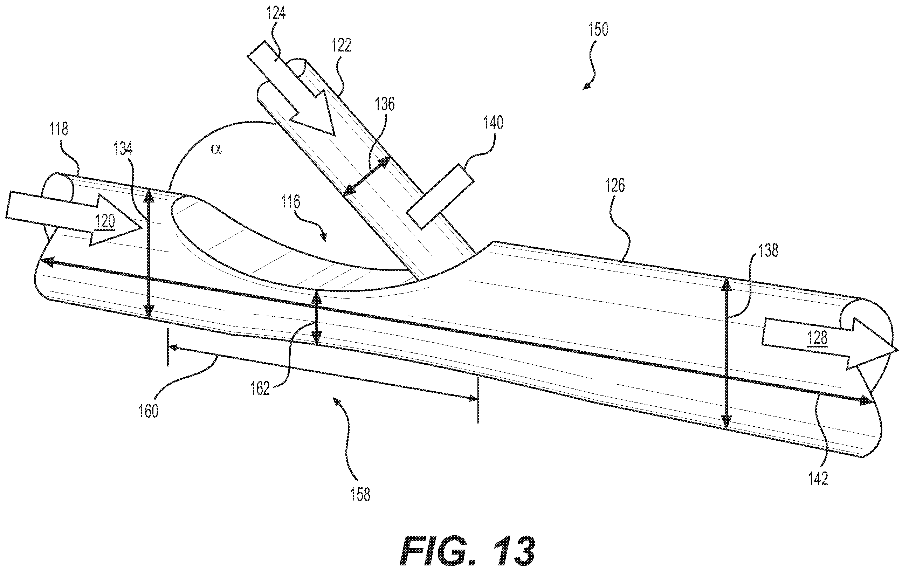

Fig. 13 is a graphical illustration of a sixth embodiment of a temperature sensing apparatus 156 according to the present invention. In this embodiment, the restrictor 158 has a shape that differs from the restrictors 130, 152. Here, the restrictor length 160 also differs from the restrictor lengths 132, 154. Furthermore, the minimal cross-sectional area 162 is semi-circular in shape rather than being circular in shape.

As should be apparent from a comparison of Figs. 9-10 with Figs. 11-13, one notable difference between these embodiments is the location of the connection of the second air ducts 122 to the respective restrictors 130, 152, 158. In Figs. 9-10, the second air duct 122 connects to the restrictor 130 at the location of the minimal cross-sectional area 144. In the embodiments illustrated in Figs. 11-13, the second air duct 122 connects to the restrictor 130, 152, 158 downstream of the location of the minimal cross-sectional area 144, 162. For Figs. 11-13, therefore, the minimal cross-sectional area 144, 162 is upstream of the location where the second air duct 122 connects to the first air duct 118.

It is noted that the second air duct 122 need not connect to the restrictor 130, 152, 158 to practice the present invention. Instead, the second air duct 122 may connect to the third air duct 126, downstream of the minimal cross-sectional area 144, 162, without departing from the scope of the present invention.

Fig. 14 is a graphical illustration of an illustrative example of a temperature sensing apparatus 164 not falling within the scope of the present invention.

This example of the temperature sensing apparatus 164 differs from the prior embodiments. However, the principle of operation, *i.e.,* by the Venturi effect, remains the same.

The temperature sensing apparatus 164 includes a first air duct 166 that extends into a housing 168. The first air duct 166 terminates in a restrictor 170. In this embodiment, the restrictor 170 is a necked-down element that is attached to or integrally formed with the end of the first air duct 166. As before, the restrictor 170 defines a restrictor length 200 and a minimal cross-sectional area 194, discussed in greater detail below.

The restrictor 170 is interior to the housing 168. The housing 168 encloses both a portion of the first air duct 166 and the restrictor 170. The housing 168 has a closed end 172 through which the first air duct 166 passes into the interior of the housing 168. The housing also includes a main housing section 174 extending from the closed end 172 and a conical housing section 176 connected to the main housing section 174.

A second air duct 178 connects to the main housing section 174 at a periphery thereof, upstream of the restrictor 170. A third air duct 180 attaches to the end of the conical housing section 176.

As in the prior embodiments, a first air flow 182 is received in the first air duct 166. As discussed above, the first air flow 182 is contemplated to be supplied as a part of the air supply of the air distribution system 40 on board the aircraft 38. The second air duct 178 receives a second air flow 184 from a passenger compartment of the aircraft. The third air duct 180 receives a third air flow 186, which is a combination of the first air flow 182 and the second air flow 184. The first air duct 166 defines a first cross-sectional area 188. The second air duct 178 defines a second cross-sectional area 190. The third air duct 180 defines a third cross-sectional area 192. The end of the restrictor 170 defines a minimal cross-sectional area 194.

As in prior embodiments, the first air duct 166 and the third air duct 180 are collinear, sharing the same common axis 196. The second air duct 178 connects to the main housing section 174 at an angle α of 60°, as in prior embodiments. However, the angle α of attachment may differ from the illustrated embodiment without departing from the scope of the present invention. While not limiting of the present invention, it is contemplated that the angle α of attachment of the second air duct 178 to the main housing section 174 may fall within the ranges discussed in connection with other embodiments.

As in prior embodiments, the temperature sensor 198 is disposed in the second air duct 178.

In the illustrative examples depicted in Figs. 14-17, the restrictor 170 is conically shaped. As illustrated, the restrictor 170 decreases from the first cross-sectional area 188 to the minimal cross-sectional area 194. In this manner, the restrictor relies on the Venturi effect, as discussed above, to increase the speed of the air passing through the restrictor 170. The restrictor length 200 defines the distance from the first air duct 166 to a restrictor outlet 202 in this embodiment.

So as not to be construed as limiting of the present invention, the restrictor length 202 may have any suitable magnitude as required or as desired. Furthermore, the shape of the restrictor 170 should not be understood as being limited to a conical shape. The restrictor 170 may have any suitable cross-sectional shape between the first cross-sectional area 188 to the smaller, minimal cross-sectional area 194 without departing from the scope of the present invention.

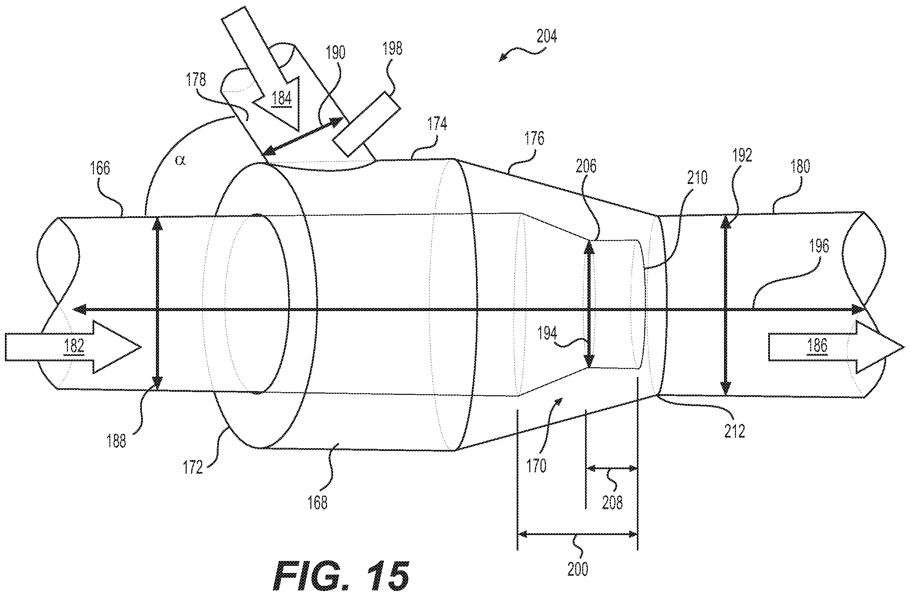

Fig. 15 is a graphical illustration of a further illustrative example of a temperature sensing apparatus 204 not falling within the scope of the present invention.

This example is similar to the temperature sensing apparatus 164, except that the restrictor 170 further includes an additional section 206. The additional section 206 defines a length 208 where the minimal cross-sectional area 194 remains constant over a portion of the restrictor length 200. The outlet 210 of the restrictor 170 lies within the conical housing section 176, but does not extend as far as the transition point 212 between the conical housing section 176 and the third air duct 180.

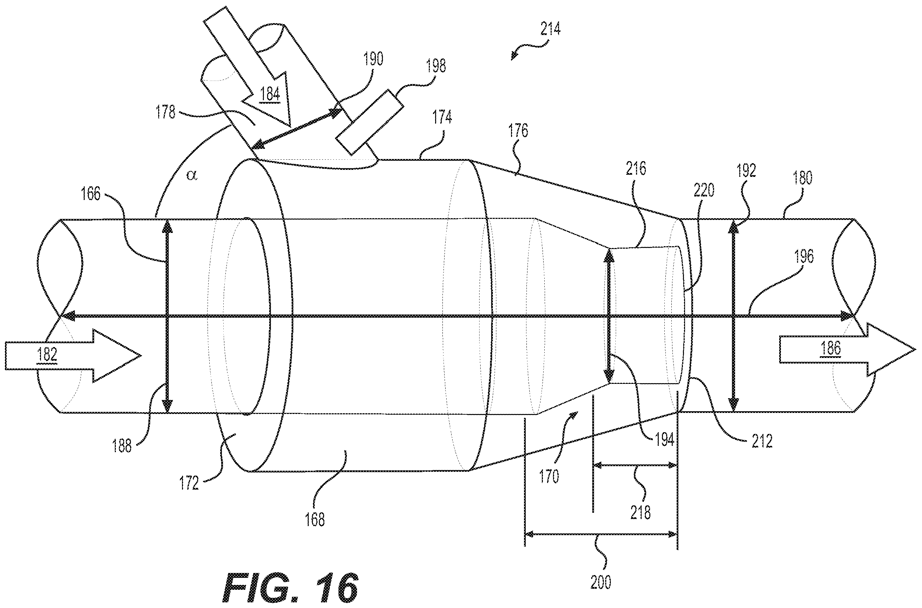

Fig. 16 is a graphical illustration of a further illustrative example of temperature sensing apparatus 214 not falling within the scope of the present invention.

This example is similar to the example illustrated in Fig. 15. Here, the additional section 216 has a length 218 that is greater than the length 208, creating a restrictor 170 with a greater length 200 than in the prior example. In this example, the outlet 220 of the restrictor 170 is commensurate with the location of the transition point 212 between the conical housing section 176 and the third air duct 180.

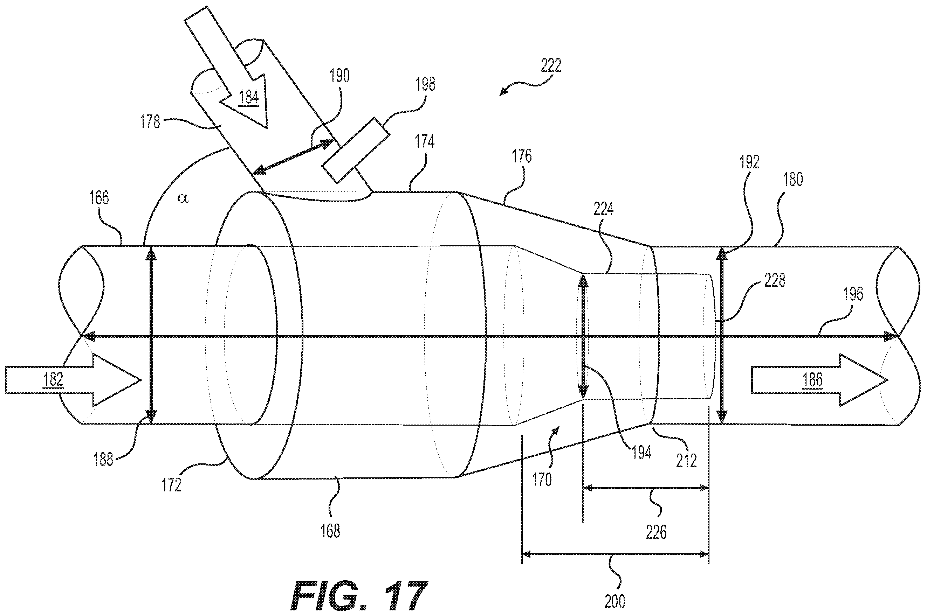

Fig. 17 is a graphical illustration of an further illustrative example of a temperature sensing apparatus 222 not falling within the scope of the present invention.

This example is similar to the example illustrated in Fig. 16. Here, the additional section 224 has a length 226 that is greater than the length 218. In this example the outlet 228 of the restrictor 170 is downstream of the location of the transition point 212 between the conical housing section 176 and the third air duct 180.

As should be apparent from the examples illustrated in Figs. 14-17, the second air duct 178 connects to the housing 168 at a location upstream of the minimal cross-sectional area 194 defined by the restrictor 170. Alternatively, the second air duct 178 may connect to any other location on the housing 168, as required or as desired.

As noted above, the embodiment(s) described herein are intended to be exemplary of the wide breadth of the present invention. Variations of the described embodiment(s) are intended to be encompassed by the present invention.

## Claims

1. An air temperature sensing apparatus (44) for an aircraft (38), comprising:
an ejector (46) comprising:
a first air duct (70) for receiving a first air flow (48) from an aircraft air distribution duct (50), the first air duct (70) defining a first cross-sectional area; and
a second air duct (72) for receiving a second air flow (52) from a passenger compartment of the aircraft, the second air flow (52) merging with the first air flow (48) downstream of the second air duct (72); and
a temperature sensor (45) in fluid communication with the second air flow (52);
wherein the ejector (46) comprises a restrictor (78) connected to the first air duct (70) defining a minimal cross-sectional area, wherein the minimal cross-sectional area of the restrictor (78) is smaller than the first cross-sectional area of the first air duct (70) so as to create, in use, a region (76) of low pressure within the ejector, causing the second air flow (52) to be suctioned over the temperature sensor (45) and through the second air duct (72);
**characterized in that**:
the ejector (46) is Y-shaped; and
the minimal cross-sectional area is at or upstream of a location where the second air duct (72) connects to the restrictor (78).

2. The air temperature sensing apparatus of claim 1, wherein the restrictor (78) defines a restrictor length, the restrictor decreasing in cross-sectional area over at least a portion of the restrictor length to the minimal cross-sectional area.

3. The air temperature sensing apparatus of any preceding claim, wherein the ejector (46) further comprises:
a housing (168) disposed around an end of the first air duct (70) and the restrictor (78);
wherein the second air duct (72) connects to the housing (168); and
wherein the minimal cross-sectional area is downstream of a location where the second air duct (72) connects to the housing (168).

4. The air temperature sensing apparatus of claim 2 or any claim dependent on claim 2, wherein the restrictor (78) increases in cross-sectional area over at least a portion of the restrictor length downstream of the minimal cross-sectional area.

5. The air temperature sensing apparatus of any preceding claim, wherein the minimal cross-sectional area remains constant over at least a portion of the restrictor length.

6. The air temperature sensing apparatus of any preceding claim, wherein the temperature sensor (45) is located within the second air duct (72).

7. The air temperature sensing apparatus of any preceding claim, further comprising a controller (68) connected to the temperature sensor (45).

8. The air temperature sensing apparatus of any preceding claim, wherein the ejector (46) further comprises a third air duct, connected to the restrictor.

9. The air temperature sensing apparatus of claim 3 or any claim dependent on claim 3, further comprising a third air duct (74), connected to the housing (168).

10. The air temperature sensing apparatus of any preceding claim, further comprising a flow balancing device (92) disposed in the second air duct (72) altering the second air flow (52) in proportion to the first air flow (48).

11. The air temperature sensing apparatus of claim 10, further comprising a piccolo (88) extending from the first air duct (70) to the flow balancing device (92), altering the second air flow (52) in response to a pressure of the first air flow (48).

## Patentansprüche

1. Vorrichtung (44) zur Messung der Lufttemperatur für ein Flugzeug (38), umfassend:
Einen Ejektor (46), umfassend:
Einen ersten Luftkanal (70) zum Empfangen eines ersten Luftstroms (48) ab einem Verteilungskanal (50) des Flugzeugs, wobei der erste Kanal (70) eine erste Querschnittsfläche definiert; und
einen zweiten Luftkanal (72) zum Empfangen eines zweiten Luftstroms (52) aus einer Passagierkabine des Flugzeugs, wobei sich der zweite Luftstrom (52) mit dem ersten Luftstrom (48) stromabwärts des zweiten Luftkanals (72) mischt; und
einen Temperatursensor (45) in Fluidverbindung mit dem zweiten Luftstrom (52);
wobei der Ejektor (46) einen mit dem ersten Luftkanal (70) verbundenen Durchflussbegrenzer (78) umfasst, der eine minimale Querschnittsfläche definiert, wobei die minimale Querschnittsfläche des Durchflussbegrenzers (78) kleiner als die erste Querschnittsfläche des ersten Luftkanals (70) ist, um, im Einsatz, einen Bereich (76) von Niederdruck innerhalb des Ejektors zu schaffen, welches bewirkt, dass der zweite Luftstrom (52) über den Temperatursensor (45) und durch den zweiten Luftkanal (72) gesaugt wird;
**dadurch gekennzeichnet, dass**:
Ejektor (46) Y-förmig ist; und
sich die minimale Querschnittsfläche an oder stromaufwärts einer Stelle befindet wo sich der zweite Luftkanal (72) mit dem Durchflussbegrenzer (78) verbindet.

2. Vorrichtung zum Messen der Lufttemperatur nach Anspruch 1, wobei der Durchflussbegrenzer (78) eine Durchflussbegrenzerlänge definiert, wobei der Durchflussbegrenzer an Querschnittsfläche über zumindest einen Teil der Durchflussbegrenzerlänge auf die minimale Querschnittsfläche abnimmt.

3. Vorrichtung zum Messen der Lufttemperatur nach einem vorhergehenden Anspruch, wobei der Ejektor (46) ferner umfasst:
Ein Gehäuse (168), das um ein Ende des ersten Luftkanals (70) und den Durchflussbegrenzer (78) angeordnet ist;
wobei sich der zweite Luftkanal (72) mit dem Gehäuse (168) verbindet; und
wobei sich die minimale Querschnittsfläche stromabwärts einer Stelle befindet wo sich der zweite Luftkanal (72) mit dem Gehäuse (168) verbindet.

4. Vorrichtung zum Messen der Lufttemperatur nach Anspruch 2 oder irgendeinem von Anspruch 2 abhängigen Anspruch, wobei der Durchflussbegrenzer (78) an Querschnittsfläche über zumindest einen Teil der Durchflussbegrenzerlänge stromabwärts der minimalen Querschnittsfläche zunimmt.

5. Vorrichtung zum Messen der Lufttemperatur nach einem vorhergehenden Anspruch, wobei die minimale Querschnittsfläche über zumindest einen Teil der Durchflussbegrenzerlänge konstant bleibt.

6. Vorrichtung zum Messen der Lufttemperatur nach einem vorhergehenden Anspruch, wobei sich der Lufttemperatursensor (45) innerhalb des zweiten Luftkanals (72) befindet.

7. Vorrichtung zum Messen der Lufttemperatur nach einem vorhergehenden Anspruch, die ferner einen mit dem Temperatursensor (45) verbundenen Controller (68) umfasst.

8. Vorrichtung zum Messen der Lufttemperatur nach einem vorhergehenden Anspruch, wobei der Ejektor (46) ferner einen dritten Luftkanal umfasst, der mit dem Durchflussbegrenzer verbunden ist.

9. Vorrichtung zum Messen der Lufttemperatur nach Anspruch 3 oder irgendeinen von Anspruch 3 abhängigen Anspruch, die ferner einen mit dem Gehäuse (168) verbundenen dritten Luftkanal umfasst.

10. Vorrichtung zum Messen der Lufttemperatur nach einem vorhergehenden Anspruch, die ferner eine Durchflussausgleichsvorrichtung (92) umfasst, die im zweiten Luftkanal (72) angeordnet ist, welche den zweiten Luftstrom (52) im Verhältnis zum ersten Luftstrom (48) ändert.

11. Vorrichtung zum Messen der Lufttemperatur nach Anspruch 10, die ferner ein Piccolo (88) umfasst, das sich aus dem ersten Luftkanal (70) zur Durchflussausgleichsvorrichtung (92) erstreckt, welches den zweiten Luftstrom (52) als Reaktion auf einen Druck des ersten Luftstroms (48) ändert.

## Revendications

1. Un appareil de détection de température d'air (44) destiné à un aéronef (38), comprenant :
un éjecteur (46) comprenant :
un premier conduit d'air (70) destiné à la réception d'un premier flux d'air (48) à partir d'un conduit de distribution d'air d'aéronef (50), le premier conduit d'air (70) définissant une première zone en section transversale, et
un deuxième conduit d'air (72) destiné à la réception d'un deuxième flux d'air (52) à partir d'un compartiment de passagers de l'aéronef, le deuxième flux d'air (52) fusionnant avec le premier flux d'air (48) en aval du deuxième conduit d'air (72), et
un détecteur de température (45) en communication fluidique avec le deuxième flux d'air (52),
où l'éjecteur (46) comprend un restricteur (78) raccordé au premier conduit d'air (70) définissant une zone en section transversale minimale, où la zone en section transversale minimale du restricteur (78) est plus petite que la première zone en section transversale du premier conduit d'air (70) de façon à créer, en utilisation, une zone (76) de basse pression à l'intérieur de l'éjecteur, amenant le deuxième flux d'air (52) à être aspiré par dessus le détecteur de température (45) et au travers du deuxième conduit d'air (72),
**caractérisé en ce que** :
l'éjecteur (46) est en forme de Y, et
la zone en section transversale minimale est au niveau de ou en amont d'un emplacement où le deuxième conduit d'air (72) est raccordé au restricteur (78).

2. L'appareil de détection de température d'air selon la Revendication 1, où le restricteur (78) définit une longueur de restricteur, le restricteur diminuant en section transversale par dessus au moins une partie de la longueur de restricteur vers la zone en section transversale minimale.

3. L'appareil de détection de température d'air selon l'une quelconque des Revendications précédentes, où l'éjecteur (46) comprend en outre :
un logement (168) disposé autour d'une extrémité du premier conduit d'air (70) et du restricteur (78),
où le deuxième conduit d'air (72) est raccordé au logement (168), et
où la zone en section transversale minimale est en aval d'un emplacement où le deuxième conduit d'air (72) est raccordé au logement (168).

4. L'appareil de détection de température d'air selon la Revendication 2 ou selon l'une quelconque des Revendications dépendant de la Revendication 2, où le restricteur (78) augmente en section transversale par dessus au moins une partie de la longueur de restricteur en aval de la zone en section transversale minimale.

5. L'appareil de détection de température d'air selon l'une quelconque des Revendications précédentes, où la zone en section transversale minimale demeure constante par dessus au moins une partie de la longueur de restricteur.

6. L'appareil de détection de température d'air selon l'une quelconque des Revendications précédentes, où le détecteur de température (45) est installé à l'intérieur du deuxième conduit d'air (72).

7. L'appareil de détection de température d'air selon l'une quelconque des Revendications précédentes, comprenant en outre un dispositif de commande (68) raccordé au détecteur de température (45).

8. L'appareil de détection de température d'air selon l'une quelconque des Revendications précédentes, où l'éjecteur (46) comprend en outre un troisième conduit d'air raccordé au restricteur.

9. L'appareil de détection de température d'air selon la Revendication 3 ou selon l'une quelconque des Revendications dépendant de la Revendication 3, comprenant en outre un troisième conduit d'air (74) raccordé au logement (168).

10. L'appareil de détection de température d'air selon l'une quelconque des Revendications précédentes, comprenant en outre un dispositif d'équilibrage de flux (92) disposé dans le deuxième conduit d'air (72) modifiant le deuxième flux d'air (52) proportionnellement au premier flux d'air (48).

11. L'appareil de détection de température d'air selon la Revendication 10, comprenant en outre un piccolo (88) s'étendant du premier conduit d'air (70) vers le dispositif d'équilibrage de flux (92), modifiant le deuxième flux d'air (52) en réponse à une pression du premier flux d'air (48).
